# EUROPEAN PATENT APPLICATION

(11) **EP 0 605 182 A2**
(43) Date of publication of application: **06.07.1994**
(21) Application number: 93310391.3
(22) Date of filing: 21.12.1993
(51) Int. Cl.: H04B 7/26

(54) **Bidirectional repeater for mobile telephone system**

(30) Priority: 30.12.1992 JP 362040/92; 03.05.1993 JP 138867/93; 07.06.1993 JP 173555/93; 23.08.1993 JP 241927/93; 04.10.1993 JP 280011/93
(71) Applicant: Niki, Yoshiro, Nagoya 464 (JP)
(72) Inventor: Niki, Yoshiro, Nagoya 464 (JP)
(74) Representative: Rackham, Anthony Charles

(57) **Abstract**

A bothway RF repeater for use in a Personal Handy Phone system or in a Personal Communications System (hereinafter refered to as a PHP system or PCS) or in the Digital European Cordless Telephone (DECT). which are operated under the FDMA/TDD or TDMA/TDD or CDMA scheme. includes a "up-stream" coaxial connector to connect a common coaxial cable and/or two mutually isolated coaxial cables and/or an antenna system directed toward a base station, and two mutually isolated amplifiers for amplifying up-link and down-link RF signals, and a control means for ensuring that avoids an undesired self-oscillations caused by an over-coupling between up-link and down-link amplifiers, and the "down-stream" coaxial connectors to connect one or more coaxial cables and/or antenna systems and/or RF radiation cables directed toward the subscribers within the micro-cell serving areas.

The control means further includes at least one RF signal detector and a control circuit, which controls the linearity, output level, and/or gain of the said amplifiers. By using the control means, the down-link amplifier gain is increased and the up-link amplifier gain is decreased simultaneously when the detector on the down-link amplifier detects the RF signals which is transmitted from the base station.

Moreover, the said bothway RF repeaters are installed within a several stray building, under ground on a top of poles, on an overhead wire cable, and/or on a constructed structures, not only for enhancing the coverage of the base station but also for ensuring the extreamly higher efficiency of channel usage by distributing the combined RF signals from a plurality of the base stations.

## Description

The invention relates generally to the field of amplifying facilities for RF (Radio-Frequency) signals which are transmitted/ received to/from one or more FDMA or TDMA/TDD or CDMA base stations, and more specifically relates to the facilities to amplify the combined FDMA/TDD or TDMA/TDD or CDMA RF carriers for enhancing the serving area of PHP system or PCS which serving area is sometime limited by some obstructions such as walls and/or ceilings that block RF signals, and to distribute them for ensuring the extreamly higher efficiency of the channel usage. When the bothway RF repeaters are applied for combining one or more FDMA/TDD or TDMA/TDD or CDMA carriers and distributed them within a plurality of the micro-cell serving area, the traffic capacity (consequently efficiency of channel usage) of the RF carriers is grately impropved, comparing that when these FDMA/TDD or TDMA/TDD or CDMA carriers are not combined and operated as an independent micro-cell serving area.

PHP systems (in other words, "PCS"=Personal Communications sytem or "PCN"=Personal Communications Network) have recently been introduced in a number of outdoor and/or indoor areas to provide wireless public telephone coverages for people who need to have accessto public telephones from either inside or outside of their offices or who are otherwise inconvenient to approach to the public telephones that are hard-wired to a PBX and/or a central switching office over conventional public telephone lines.

In a PHP system or PCS, an area is divided into a plurality of small regions, or "micro-cell", each of which is covered by very low power (10mW) transmitters. Currently, PHP system or PCS services is being provided on the 1.9 GHz frequency bands and operated in the FDMA/TDD or TDMA/TDD or CDMA scheme. And one set of the transmitter and receiver shares the same frequency carrier by dividing the time domain into two divisions. One of the divisions is used for "down-link" transmissions from a base station to the subscribers. The "micro-cell site" is the location of the antenna from which the transmissions are effected for the micro-cell. Another time division is used for "up-link" transmissions from the subscribers within the micro-cell for reception by the base station receiver. And currently, a stand-alone base station is set on the central of the micro-cell site. Each frequency carrier assigned for the PHP system has a 300 kilohertz bandwidth and for the CT-2 system has a 100kilohertz bandwidth.

U.S. Patent Application Ser. No. 787,332 discloses several embodiments of a cell enhancer system, having an amplifier in various configurations for receiving, amplifying, and re-transmitting down-link signals from a cell site into an obstructed area, and also for receiving up-link signals from subscribers in the obstructed area, amplifying them and re-transmitting the amplified signals to the cell site. In one embodiment disclosed in that application, a single wide-band amplifier has an input terminal that receives both up-link and down-link signals from antennas through a duplexer network, and that transfers through another duplexer network amplified up-link and down-link signals to appropriate antennas for transmission. The wide-band amplifier amplifies all signals in at least the two-cellular radio telephone frequency bands.

Problems may arise with the above-described cell enhancer when applied for the PHP systems or PCS. Since the enhancer amplifies signals in the different frequency bands for up-links and down-links, a duplexer network can separate the RF signals between the up-link and down-link with very large RF isolations and the wide-band amplifier can amplify all signals without an undesired self-oscillation caused by the over-coupling between up-link and down-link amplifiers. However, since the PHP systems or PCS adopt the FDMA/TDD or TDMA/TDD or CDMA scheme, the same frequency carrier is assigned for up-link and down-link transmissions, and since the transmission and reception to/from a base station are divided into two time divisions, it is unable to isolate the up-link and down-link signals with the duplexer networks.

The invention provides a new and improved apparatus for amplifying the RF singals to/from a base station to enhance the coverage of the serving area where the obstructions otherwise reduce the RF signal levels, and for distributing one or more FDMA/TDD or TDMA/TDD or CDMA carriers into a plurality of the micro-cell serving area to ensure the extreamly higher efficiency in the channel usage. The amplifier system must have the sufficient isolations between up-link and down-link amplifiers to amplify and re-transmit the RF signals assigned for the PHP systems or PCS so as to avoid an undesired self-oscillation caused by the over-coupling between up-link and down-link amplifiers.

In brief summary, the apparatus includes an "up-stream" coaxial cable and/or RF radiation cables and/or antenna system directed toward a base station for receiving and transmitting the RF signals to/from the base station, and a "down-stream" coaxial cable and/or antenna system and/or RF radiation cable directed toward subscribers within the micro-cell serving areas. Such coaxial cables and/or antenna systems and/or RF radiation cables (or leaky coaxial cables) are provided to transfer and/or radiate RF signals to/from the subscribers within a micro-cell serving area.

The amplifier system includes at least two mutually isolated amplifiers and optionally a control means for ensuring the sufficient isolations between up-link and down-link amplifiers to avoid an undesired self-oscillation caused by an over-coupling between up-link and down-link amplifiers.

In one embodiment, one common "up-stream" coaxial connector to connect a coaxial cable and/or RF radiation cable directing toward a base station, and one or more "downstream" coaxial connectors to connect one or more coaxial cables and/or antenna systems and/or RF radiation cables are provided to enhance and/or distribute the RF signals into a plurality of the micro-cell serving area. Two isolated up-link and down -link amplifiers amplify the RF signals. When a detector detects the RF signals transmitted from the base station, the control means increases the down-link amplifier gain and decreases the up-link amplifier gain simultaneously to avoid an undesired self-oscillation as above described procedures. Or the control means is at least supervising the conditions which cause such self-oscillating conditions by compering these outputs from the detectors and if the conditions exceed the limits, the control means decreases the amplifiers gain immediately.

In the second embodiment, mutually isolated coaxial connectors to connect the coaxial cables and/or antenna systems and/or RF raditation cables directing toward a base station, and one or more "downstream" coaxial connectors to connect one or more coaxial cables and/or antenna systems and/or RF radiation cables are provided to enhance and/or distribute the RF signals into a plurality of the micro-cell serving area. Two isolated up-link and down-link amplifiers amplify the RF signals. When a detector detects the RF signals transmitted from the base station. the control means increases the down-link amplifier gain and decreases the up-link amplifier gain simultaneously to avoid an undesired self-oscillation as above described procedures. Or the control means is at least supervising the conditions which cause such self-oscillating conditions by compering these outputs from the detectors and if the conditions exceed the limits, the control means deicreases the amplifiers gain immediately.

In the thired embodiment, inputs and/or outputs of a plurality of base stations are combined and distributed toward the bothway RF repeaters, which are installed in a building, under ground, on a top of poles, and/or on an overhead wire cable, to ensure the extreamly higher efficiency of channel usage.

The invention is pointed out particularly in the appended claims. The above and further advantages of the invention will be better understood by refering the following detailed descriptions of an illustrative embodiment taken in conjunction with the accompanying drawings, in which:
FIG. 1 is an installation scheme of the bothway RF repeaters in accordance with the invention;
FIG. 2 is a system block diagram including a bothway RF repeater constructed in accordance with the invention;
FIG. 3 is a block diagram of a bothway RF repeater constructed in accordance with the invention;
FIG. 4 is a block diagram of a detector constructed in accordance with the invention;
FIG. 5 is a block diagram of a controller constructed in accordance with the invention;
FIG. 6 is a block diagram of an another type of amplifier constructed in accordance with the invention;
FIG. 7 is a system block diagram including a bothway RF repeater of the second embodiment of the invention;
FIG. 8 is a block diagram of a bothway RF repeater of the second embodiment of the invention;
FIG. 9 is a system block diagram including a bothway RF repeater of the third embodiment of the invention;
FIG. 10 is a block diagram of a bothway RF repeater of the third embodiment of the invention;
FIG. 11 is a system block diagram including a bothway RF repeater of the fourth embodiment of the invention;
FIG. 12 is a block diagram of a bothway RF repeater of the fourth embodiment of the invention;
FIG. 13 is a block diagram of a bothway RF repeater of the fifth embodiment of the invention;
FIG. 14 is an antenna structure constructed in accordance with the invention; and
FIG. 15 is a block diagram of a base station constructed in accordance with the invention;
FIG. 16 is a block diagram of a prior art of cell enhancers.

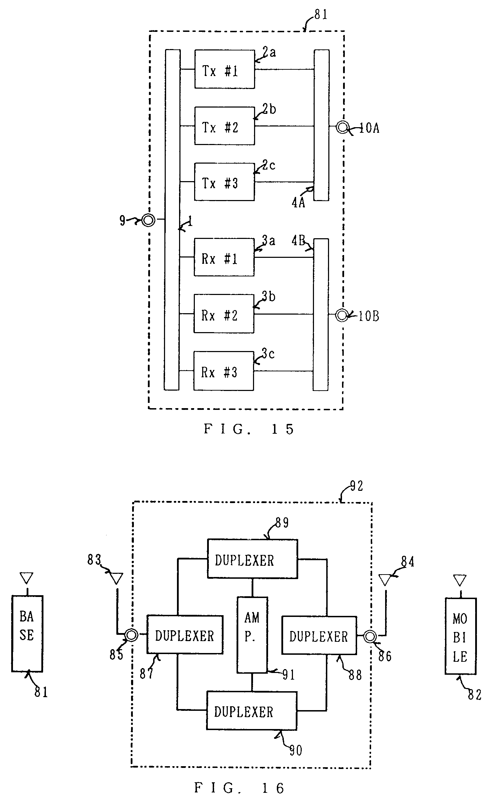

With reference to FIG. 16, which depicts a cell enhancer as described in the aforementioned U.S. patent application Ser. No. 787,332 a prior art of cell enhancers includes an antenna system 83 which is directed for the base station 81, a second antenna system 84 which is directed for the subscribers 82 in an obstructed region, and an amplifier 91 which receives the signals from the base station 81 by the way of antenna system 83, amplifies them, and transmits them into the shadow region through antenna system 84. In addition, the cell enhancer 92 receives signals from subscribers 82 in the shadow region through antenna system 84, amplifies them and transmits them to the base station 81 through antenna system 83.

In the cell enhancer 92 depicted in FIG. 16, the amplifier 91 is a single wideband amplifier that is capable of amplifying all frequency carriers in the two twenty-megahertz radio frequency bands allocated to the cellular service, one band being for down-link transmission from the base station 81 to the subscribers 82 and the other band being for up-link transmission from the subscribers 82 to the base station 81. A duplexer 87 connected to antenna system 83 through a connector 85 receives radio frequency signals from the antenna system and transfers those in the appropriate 870 to 890 megahertz band to a second duplexer 89.

Duplexer 89 also has a second input terminal, which receives radio frequency signals from another duplexer 88, in one of the bands 825 to 845 megahertz, from antenna system 84 originating at a subscriber 82. Duplexer 89 couples the radio-frequency signals in the selected bands from both duplexers 87 and 88 to an input terminal of a wide-band amplifier 91.

After being amplified by the wideband amplifier 91, the signals are coupled to the input terminal of another duplexer 90. Duplexer 90 couples the portion of the signals in the 825 to 845 megahertz band to an input terminal of duplexer 87 which couples the signals to antenna system 83 for transmission to the base station 81. The duplexer 90 also couples the portion of the signal from the wideband amplifier that is in the 870 to 890 megahertz band to an input terminal of duplexer 88. which couples the signal to antenna system 84 for transmission into the shadow area.

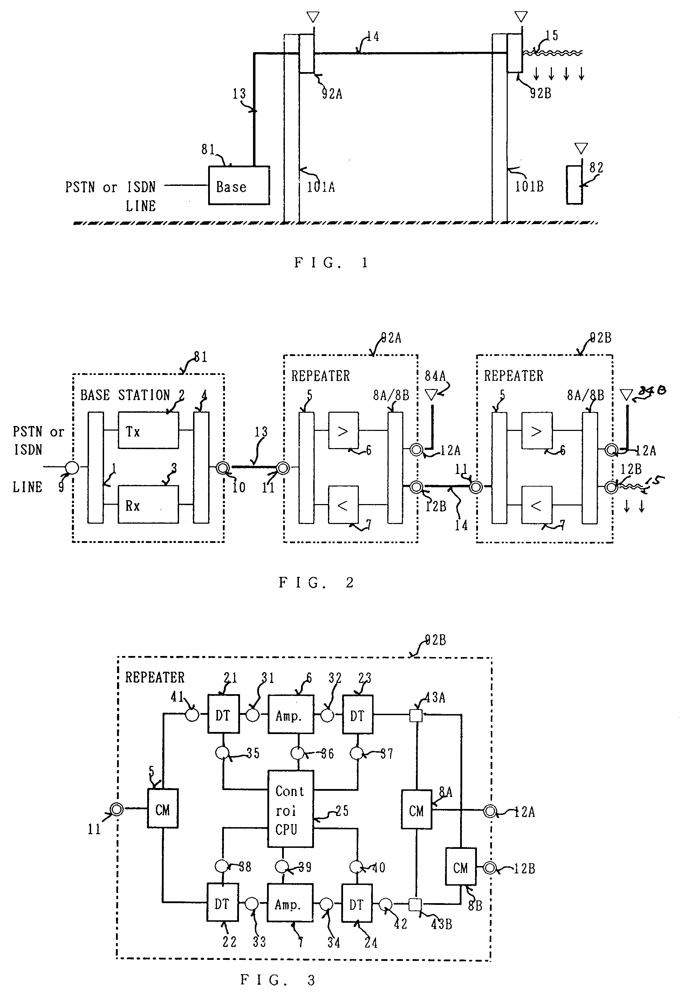

With reference to FIG. 1, bothway RF repeaters 92A and 92B constructed in accordance with this invention are installed on a top of poles 101A and 101B, and connected toward the base station 81 through coaxial cables 13, 14 and RF radiation cable 15. RF signals transmitted from the base station 81 is send through the coaxial cables 13, 14 and RF radiation cable 15 (must be equal length to the base station if to get the equal time delay) to bothway RF repeaters 92A and 92B. and amplified and radiated through antenna to the subscribers 82. Since the RF signals from the base station 81 is attenuated by the loss of the coaxial cables 13 and 14. the bothway RF repeaters 92A and 92B must amplify the RF signals up to the required signal level. RF signals transmitted from subscribers 82 are pre-amplified by the bothway repeater 92B and 92A, and transfered through the coaxial cable 14 and 13 to the base station 81. The antenna 84 performs Microcell Serving Areas to serve these subscribers within these Areas. Instead of the antenna systems and/or coaxial cables, RF radiation cables (or leaky coaxial cable) can be used to radiate the RF signals to/from subscribers.

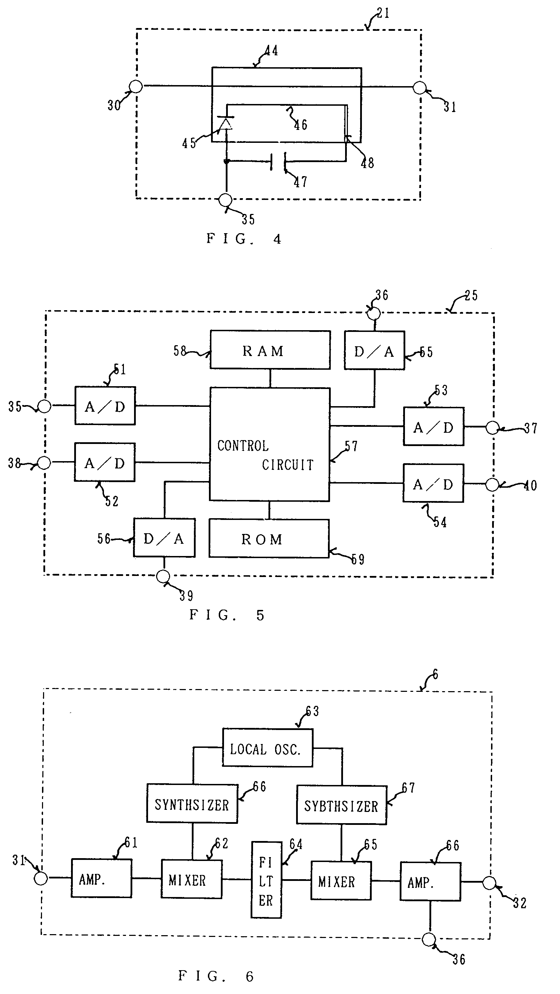

With reference to FIG. 2, bothway RF repeaters 92A and 92B constructed in accordance with this invention are connected toward a base station 81, which consists of one or more FDMA/TDD or TDMA/TDD or CDMA transmitters 2 and receivers 3, a RF combiner/divider 4, and a telephone line combiner 1, through a common coaxial cable 13, 14 and RF radiation cable 15. The bothway RF repeater 92A and 92B includes, as depicted in FIG. 3, amplifiers 6 and 7, RF signal ditectors 21∼24. combiners 5 and 8A/8B. dividers 43A and 43B, coaxial connectors 11 and 12A/12B. and a control means 25. Since the transmitters 2 and receivers 3 are operated under the FDMA/TDD or TDMA/TDD or CDMA scheme, these are not excited at the same time. When the base station transmits RF signals, the combiner 5 combines the down-link RF signals and lead them to the detector 21. The RF signals are amplified by the amplifier 6 and detected by the detector 23. If the detector 21 detects the RF signals and the output of the detector 21 is connected to the control means 25, the control means 25 controls the linearity of the amplifier 6 compering the output of the detector 21 with that of the detector 23 and decreases the gain of the amplifier 7 simultaneously. The RF signals amplified and linearized are divided by the 43A and one of the output is combined by the combiner 8 and led them to the coaxial connectors 12A and 12B which are terminated by the "downs-tream" antenna system 84A or 84B and RF radiation cable 15. When a subscriber transmits RF signals, the combiner 8A or 8B combines the up-link RF signals and transfers them to a detector 24 through divider 43B. The RF signals are amplified by an amplifier 7 and then detected by a detector 22. If the detector 24 and 22 detect the up-link RF signals, the control means 25 controls the linearity of the amplifier 7, if needed, compering the output of the detector 22 with that of the detector 24, and decreases the gain of the amplifier 6 simultaneously unless the detector 21 detect any RF signals. The said RF signals are combined together by the combiner 5 and are lead to the coaxial connector 11 which is terminated by the "upstream" coaxial cable and/or antenna system. The control process are continued adaptively and the control parameters are memorized even during the power supply is failed. Some of the detectors may be eliminated according to the design progress. The control means 25 is at least supervising the conditions which cause any self oscillating condition by compering these outputs from the detectors 21, 22, 23, and 24 and if the conditions exceed the limits, the control means 25 deicreases the gain of amplifiers 6 and 7 immediately. If the more combiners are provided, the more coaxial cables and/or antenna systems and/or RF radiation cables can be connected to serve the different directions of the serving areas.

FIG. 4 is a blockdiagram of the detector 21 which includes a directional coupler 44, a coupling loop 46, a terminated load 48, a detecting diode 45, and a by-pass capacitor 47. When the RF signals is applied from the terminal 30 to the terminal 31, a portion of them is coupled by a loop 46 and which is detected by a diode 45 and by-pass by a capacitor 47 and led to the terminal 35. Another end of the loop 46 is terminated by a load 48. If the RF signals are given to the terminal 30, then the most of the RF signals are transfered to the terminal 31. Some amount of the RF signals are coupled to the loop 46 and detected into the DC voltage. This blockdiagram depicts the case that the detectors detect the envelope or amplitude of the RF signals, but these detectors may detect the phase and/or frequecy modulated signals over the RF signals and output the other signal schemes.

FIG. 5 is a blockdiagram of the control means 25 which includes A/D converters 51 ∼54. D/A converters 55 and 56, a control circuit 57, a random access memory (RAM) 58, and a read only memory (ROM) 59. When the detector 21 detects the RF signals and output the DC voltage and/or other signal schemes to the terminal 35. the output signal is converted from an analog signal to a degital signal by A/D converter 51. By the same manner, the output signals from detectors 22, 23, and 24 are converted from an analog signal to degital signals by A/D converters 52 ∼54. The control software is burned in the ROM 59 and according to which the linearity and/or gain of amplifiers 6 and 7 are controlled through the D/A converters 55 and 56. These control parameters are memorized in the RAM 58 even when the power supply is failed.

FIG. 6 is a blockdiagram of the amplifiers 6 or 7 which are usually constructed with only straight amplifiers 61 and 66. Besides of the straight amplifiers 61 and 66, mixers 62 and 65, a local oscillator 63. and a filter 64 are added. When RF signals are applied to the terminal 31, these RF signals are amplified by the amplifier 62. converted to an intermediate frequency by the mixer 62 combining the local frequency generated by the local oscillator 63, filtered by the filter 64. converted to an original frequency by the mixer 65 combining the local frequency generated by the oscillator 63, and then amplified and transfered to the terminal 32 by the straight amplifier 66 which gain is controlled through the terminal 36.

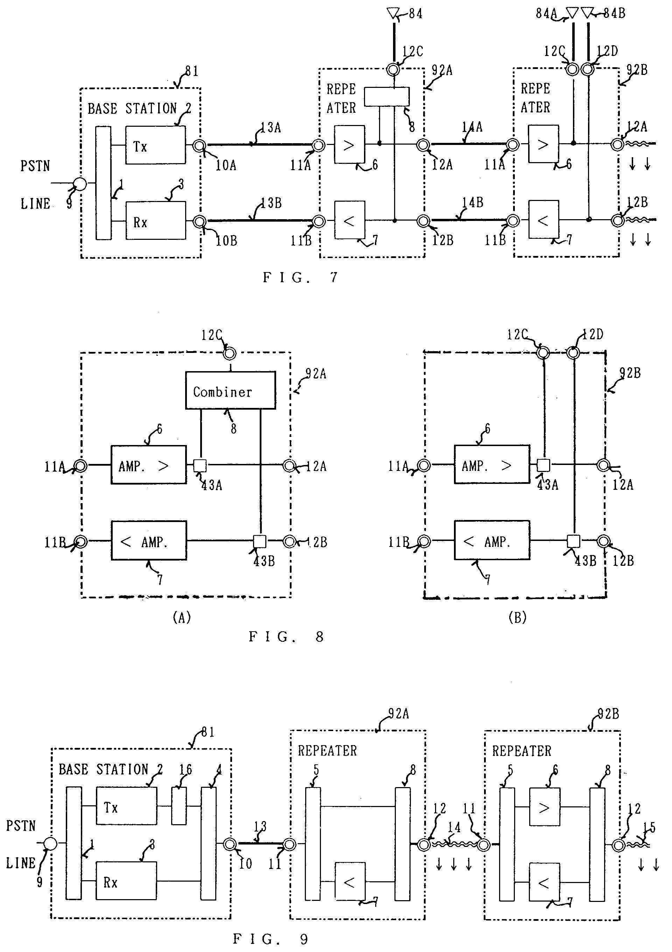

With reference to FIG. 7, bothway RF repeaters 92A and 92B of the second embodiment of the invention are connected toward a base station 81, which consists of one or more FDMA/TDD or TDMA/TDD or CDMA transmitters 2 and receivers 3, and a telephone line combiner 1, through mutually isolated coaxial cables 13A/13B and 14A/14B and 15A/ 15B. The bothway RF repeater 92A and 92B includes, as depicted in FIG. 8(A) and 8(B), amplifiers 6 and 7, dividers 43A and 43B, a combiner 8, and coaxial connectors 11A, 11B, 12A, 12B and 12C, though the bothway RF repeater 92B includes an additional coaxial connector 12D instead of a combiner 8. Since the transmitters 2 and receivers 3 have isolated terminals 10A and 10B and are operated under the FDMA/TDD or TDMA/TDD or CDMA scheme, these transmitters ans receivers are isolated enough and not excited at the same time. When a base station 81 transmits RF signals, these RF signals are sent through coaxial cable 13A and transfered to the terminal 11A. These RF signals are amplified by the isolated amplifier 6, divided by the divider 43A, combined by the combiner 8, and led to the coaxial connector 12C which is terminated by the "downstream" antenna system 84. And another side of the divider 43A is terminated by the connector 12A. When a subscriber transmits RF signals, the combiner 8 and divider 43B led the up-link RF signals to the isolated amplifier 7. After amplified, the RF signals are led to the isolated terminal 11B, connected to the isolated coaxial cable 11B, and then lead to the receiver 3 in the base station 81. Since all circuits except combiner 8 in the bothway RF repeaters 92A are isolated enough, there are enough margins to avoid an undesired self-oscillation caused by the over-coupling between up-link and down-link amplifiers. Conditions between these parameters are;$\text{2S + 2L + T/R > 2G}$

Where;
- S: = Isolation of the combiner 8 in dB
- L: = Loss of the coaxial cables 14A and 14B in dB
- T/R: = Loss between Transmitter and Receiver in dB
- G: = Gain of the amplifiers 6 and 7 in dB

Since the gain of the amplifiers is set equal to the loss of coaxial cables (2L=2G), (2S+T/R)dB is a margin to avoid an undesired self-oscillations. If more combiners and dividers are provided in a RF repeater, RF signals can be distributed to the multiple directions. Since the bothway RF repeater 92B, as depicted in Figure 8(B), includes a coaxial connector 12D instead of the combiner 8, two isolated "downstream" antenna system and/or RF radiation cables can be connected to ensure the larger isolations between up-link and down-link amplifiers than that of the combiner 8.

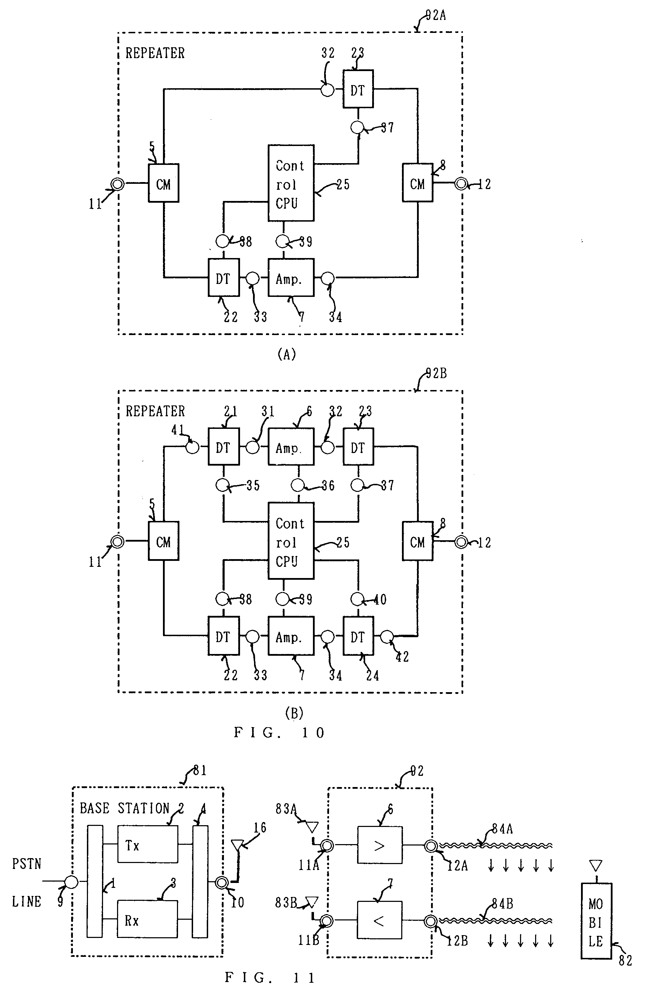

With reference to FIG. 9, bothway RF repeaters 92A and 92B of the third embodiment of the invention are connected toward a base station 81, which consists of one or more FDMA/TDD or TDMA/TDD or CDMA transmitters 2 and power amplifiers 16 and receivers 3, a RF combiner 4, and a telephone line combiner 1, through the common coaxial cables 13 and RF radiation cables 14 ans 15. The RF radiation cables 14 and 15 radiates RF signals toward the virtical direction from the surface of the cables and couples RF signals to the subscribers and ensures Radio communications between the base station and subscribers. The bothway RF repeater 92A includes, as depicted in FIG. 10(A), an amplifier 7, an RF signal ditector 23, combiners 5 and 8, coaxial connectors 11 and 12, and a control means 25. Since the transmitter 2 and receiver 3 are operated under the FDMA/TDD or TDMA/TDD or CDMA scheme, these are not excited at the same time, but the power output of the transmitters 2 are amplified several times by the high power amplifiers 16. When the base station transmits RF signals, the combiner 5 combines the down-link RF signals and leads them to a detector 23. The RF signals are big enough and need not to amplify with an amplifier in the RF repeater 92A and/or 92B. If the RF signals are detected by a detector 23, the control means 25 decreases the gain of the amplifier 7 simultaneously. The RF signals are combined by the combiner 8 and are led to the coaxial connector 12 which is terminated by the "downstream" RF radiation cable 14. When a subscriber transmits RF signals, the RF signals are coupled to the RF radiation cable 14 and the combiner 8 combines the up-link RF signals and transfers them to the amplifier 7 and then detected by a detector 22. When the detector 22 detects the RF signals, the control means 25 decreases the gain of the amplifier 7 simultaneously. The RF signals amplified are combined by the combiner 5 and led them to the coaxial connector 11 which is terminated by the "upstream" coaxial cable. These control process are continued adaptively as described above. The bothway RF repeater 92B, as depicted in FIG. 10(B), the detector 21 and amplifier 6 are added to the above bothway RF repeater 92A which amplifies the down-link RF signals though it is pre-amplified by the power amplifier 16, since the repeater 92B is located far from the base station 81.

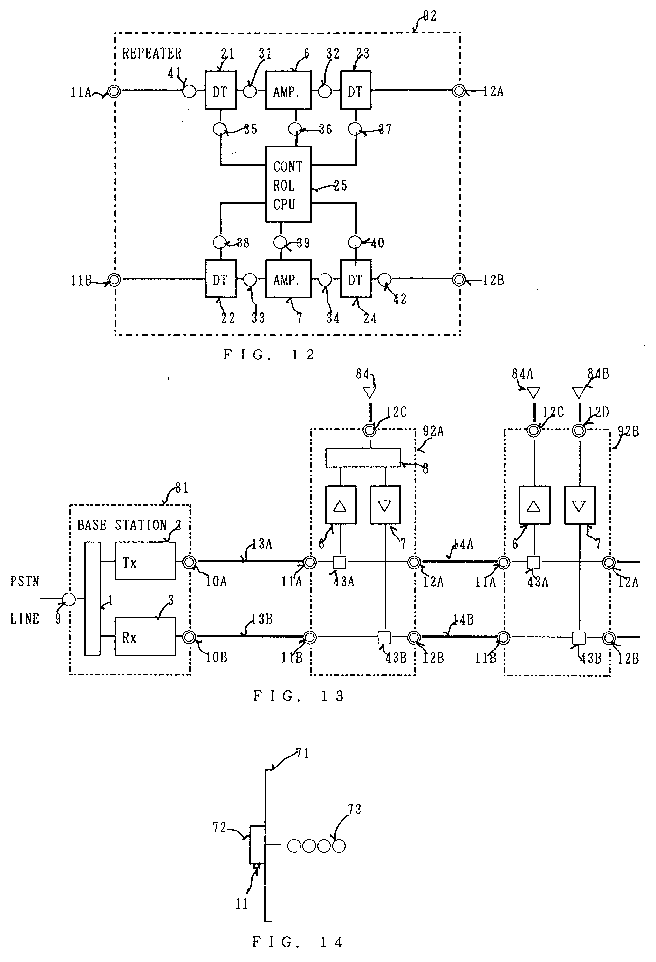

With reference to FIG. 11, a bothway RF repeater 92 of the fourth embodiment of the invention is coupled toward a base station 81, which consists of one or more FDMA/TDD or TDMA/TDD or CDMA transmitters 2 and receivers 3, a RF combiner 4, a "down-stream" antenna system 13, and a telephone line combiner 1, through the "up-stream" antenna system 83A and 83B of the bothway RF repeater 92. The bothway RF repeater 91, as depicted in FIG. 12, includes amplifiers 6 and 7, RF signal ditectors 21 ∼24, coaxial connectors 11A, 11B, 12A and 12B, and a control means 25. The "down-stream" RF radiation cables and/or antenna sytems 84A and 84B are connected to the connector 12A and 12B to couple through RF signals with subscribers within the micro-cell serving area. Since one or more transmitters 2 and receivers 3 are operated under the FDMA/TDD or TDMA/TDD or CDMA scheme, these are not excited at the same time. When the base station transmits RF signals, an antenna 83A receives the RF signals from the base station and which is transfered to a detector 21 which may be installed at the middle stage of the amplifier 6. The RF signals are amplified by an amplifier 6 and detected by a detector 23. If the detector 21 detects the large RF signals, the control means 25 controls the linearity of the amplifier 6 compering the output of the detector 23 with that of the detector 21, and decreases the gain of the amplifier 7 simultaneously. The RF signals amplified and linearized are led to the coaxial connector 12A which is terminated by the "down-stream" RF radiation cables and/or antenna systems 84A. And a subscriber can receives these RF signals accordingly. When a subscriber 82 transmits RF signals, the "down-stream" RF radiation cables and/or antenna systems 84B receives the up-link RF signals and transfer them to a detector 24 which may be installed at the middle stage of the amplifier 7. The RF signals are amplified by an amplifier 7 and then detected by a detector 22. If the detector 24 and 22 detect the up-link RF signals, the control means 25 controls the linearity of the amplifier 7 compering the output of the detector 22 with that of the detector 24, and decreases the gain of the amplifier 6 simultaneously if the detector 21 does not detect larger RF signals. The RF signals amplified and linearized by the amplifier 7 are led to the coaxial connector 11B which is terminated by the "up-stream" antenna system 83B. These controls are continued adaptively and the control parameters are memorized even when the power supply is failed. Some of the detectors may be eliminated according to the design progress.

With reference to FIG. 13, bothway RF repeaters 92A and 92B of the fifth embodiment of the inventions are connected toward a base station 81, which consists of one or more FDMA/TDD or TDMA/TDD or CDMA transmitters 2 and receivers 3, and a telephone line combiner 1. through isolated coaxial cables 13A and 13B and/or 14A and 14B. The bothway RF repeater 92A and 92B includes bothway amplifiers 6 and 7, a combiner 8, directional couplers 43A and 43B, and coaxial connectors 11A, 11B, 12A and 12B, though the bothway RF repeater 92B includes the coaxial connector 12D instead of the combiner 8. Since the transmitters 2 and receivers 3 are isolated at the terminals 10A and 10B, and are operated under the FDMA/TDD or TDMA/TDD or CDMA scheme. these are isolated enough and not excited at the same time. When the base station transmits RF signals, the signals are transfered through the coaxial cable 13A and reached to the terminal 11A. These signals are coupled with the directional coupler 43A and amplified by the isolated amplifier 6, combined by the combiner 8, and led to the coaxial connector 12C which is terminated by the "down-stream" antenna systems and/or RF radiation cables 84A. When a subscriber 82 transmits RF signals, the combiner 8 combines the up-link RF signals and led to the isolated amplifier 7. After amplified, the RF signals are led to the directional coupler 43B and then isolated terminal 11B. The RF signals then sent out to the isolated coaxial cable 13B, and led to the receivers 3 in the base station 81. Since the all circuits except combiner 8 in the bothway RF repeaters 92A are isolated enough, there are enough margins to avoid an undesired self-oscillation caused by the over-coupling between up-link and down-link amplifiers. Conditions between parameters are;$\text{2S + 2C + 2L + T/R > 2G}$

Where;
- S: = Isolation of the divider 8 in dB
- C: = Loss of the directional coupler in dB
- L: = Loss of the coaxial cables 14A and 14B in dB
- T/R: = Loss between Transmitter and Receiver in dB
- G =: Gain of the amplifiers 6 and 7 in dB

Since the gain of the amplifiers is set equal to the loss of coaxial cables. (2S+2C+T/R) dB is a margin to avoid an undesired self-oscillations. This method is applicable for the usage of common coaxial cables as in FIG. 2 or 9 with a common directional coupler. Since the bothway RF repeater 92B includes a coaxial connector 12D instead of the combiner 8, two isolated "downstream" antenna systems and/or RF radiation cables can be connected to ensure the larger isolations between up-link and down-link amplifiers than that of the combiner 8.

With reference to FIG. 14, an antenna structure which constructed in accordance with this invention includes a ground plane 71, a shielding box 72, a herical antenna 73, and a coaxial connector 11. Standing waves are so offten observed under the indoor radio propagation conditions and these degrade the quality of the indoor radio communications. If an antenna has a ground plan 71, such standing waves always generate the "zero potential" at the surface of the ground plan 71. Since this type of antenna is designed by considering the fact that the potential of the ground surface is always "zero", a good reception of the RF signals are always being maintained even if the standing waves are existing. To minimize the connection loss between the "down-stream antenna system and a bothway RF repeater and to keep a compact size, it is essential to put a bothway RF repeater within a shielding box 72. Instead of a herical antenna, other types of ground plan type antennas are applicable such as an ground plan array antenna, a parabolic antenna, corner refrectorantenna, patch antenna, or etc.

With reference to FIG. 15, a base station which constructed in accordance with this invention includes telephone line interface circuits 1, two or more FDMA/TDD or TDMA/TDD or CDMA transmitters 2a, 2b and 2c, two or more FDMA/TDD or TDMA/TDD or CDMA receivers 3a. 3b and 3c, a transmitter combiner 4A. a receiver divider 4B, and isolated coaxial connectors 10A and 10B. Comparison table is shown hereunder w-hich describes the number of TDMA/TDD transmitters and receivers vs traffic capacity, when the TDMA/TDD has 4 time slots, and one control slot per one base station is assigned, and 1% of blocking rate is applied. As shown in the Table, if the Transmitter outputs and Receiver inputs are combined and/or divided, the traffic capacities are increased drastically according to the incriment of the number of Transmitters and Receivers.

| No. of B/S | Stand alone B/S | Combined & Distributed |
|---|---|---|
| 1 | 0.45 Erlang | 0.45 Erlang |
| 2 | 0.45 x 2 = 0.9 | 2.48 x 1 = 2.48 |
| 3 | 0.45 x 3 = 1.35 | 5.1 x 1 = 5.1 |
| 4 | 0.45 x 4 = 1.8 | 8.0 x 1 = 8.0 |

Another problem area for the digital signal transmissions over the radio frequencies is the bad Bit Error Rate under the delay spread circumstances caused by the multi-path propagations. A RF radiation cable (or a Leaky coaxial cable) and/or a RF radiation wave guide are very much effective to eliminate such problem and to ensure the good Bit Error Rate even under the delay spread circumstanses. For such purposes Coaxial cables and/or antenna systems shown in FIG. 1, 2, 7, 9, 11 and 13 can be replaced by a RF radiation cable (or leaky coaxial cable) or a RF radiation wave guide or similar means.

When the Listen-before-talk is required, either a base station or subscriber must monitor the RF carriers wehter occupied or not. When the transceivers and receivers are operated under the FDMA/TDD or TDMA/TDD or CDMA scheme, the receiver in the base station must have the capability to monitor the RF carrires even if the transmitter, which is located close to the said receiver, is transmitting the RF signals. and which may desensitaize the receiver sensitivity. The separated antena systems and/or RF radiation cables as depicted as the bothway RF repeater 92B in FIG. 7 or FIG. 13 are very much effective to resolve these problems.

## Claims

1. For use in a Personal Handy Phone system or in a Personal Communications System or DECT system, a bothway RF repeater for combining and distributing and/or enhancing one or more FDMA/TDD or TDMA/TDD or CDMA carriers, to get a higher efficiency of the frequency usage in a serving area and/or to ensure a good quality of the communications between a base station and a subscriber, the said bothway RF repeater comprising:
(a) isolated up-link amplifier and down-link amplifier to amplify RF signals;
(b) isolated up-link connector and down-link connector to connect mutually isolated coaxial cables and/or antenna systems and/or RF radiation cables directed toward a base station; and
(c) isolated up-link connector and down-link connector to connect mutually isolated coaxial cables and/or RF radiation cables and/or antenna systems directed toward subscribers and/or next stage of the bothway RF repeater.

2. For use in a Personal Handy Phone system or in a Personal Communications system or DECT system, a bothway RF repeater for combining and distributing and/or enhancing one or more FDMA/TDD or TDMA/TDD or CDMA carriers, to get a higher efficiency of the frequency usage in a serving area and/or to ensure a good quality of the communications between a base station and a subscriber, the said bothway RF repeater comprising:
(a) isolated up-link amplifier and down-link amplifier to amplify RF signals;
(b) isolated up-link connector and down-link connector to connect mutually isolated coaxial cables and/or antenna systems and/or RF radiation cables directed toward a base station; and
(c) one or more combiners and/or dividers to combine and/or divide the said up-link amplifier and down-link amplifier, and to connect one or more "down-stream" antenna systems and/or RF radiation cables directed toward subscribers, and/or one or more common and/or mutually isolated coaxial cables directed toward the next stage of the bothway RF repeaters.

3. For use in a Personal Handy Phone system or in a Personal Communications Systems or DECT system. a bothway RF repeater for combining and distributing and/or enhancing one or more FDMA/TDD or TDMA/TDD or CDMA carriers, to get a higher efficiency of the frequency usage in a serving area and/or to ensure a good quality of the communications between a base station and a subscriber, the said bothway RF repeater comprising:
(a) isolated up-link amplifier and down-link amplifier to amplify RF signals;
(b) one or more combiner and/or divider to combine and/or divide the said up-link amplifier and down-link amplifier, and to connect one or more common and/or mutually isolated coaxial cables and/or RF radiation cables directed toward a base station; and
(c) isolated up-link connector and down-link connector to connect mutually isolated coaxial cables and/or antenna systems and/or RF radiation cables directed toward subscribers.

4. For use in a Personal Handy Phone system orin a Personal Communications System or DECT system, a bothway RF repeater for combining and distributing and/or enhancing one or more FDMA/TDD or TDMA/TDD or CDMA carriers, to get a higher efficiency of the frequency usage in a serving area and/or to ensure a good quality of the communications between a base station and a subscriber, the said bothway RF repeater comprising:
(a) isolated up-link amplifier and down-link amplifier to amplify RF signals;
(b) one or more combiners and/or divider to combine and/or divide the said up-link amplifier and down-link amplifier, and to connect one or more common and/or mutually isolated coaxial cables and/or RF radiation cables directed toward a base station; and
(c) one or more combiners and/or dividers to combine and/or divide the said up-link amplifier and down-link amplifier, and to connect one or more "down-stream" antenna systems and/or RF radiation cables directed toward subscribers, and/or one or more common and/or mutually isolated coaxial cables directed toward the next stage of the bothway RF repeaters.

5. A bothway RF repeater as defined in claim 1, 2. 3 and 4, wherein said amplifiers comprising:
(a) isolated up-link amplifier and/or down-link amplifier to amplify RF signals;
(b) one or more detectors to detect the RF signal levels and/or modulated signals of the up-link amplifier and/or down-link amplifier; and
(c) control means to control the gain and/or linearity and/or output level of the said amplifiers.

6. A bothway RF repeater as defined in claim 1, 2, 3, 4 and 5, wherein the said amplifiers comprising a straight amplifier and/or a mixer and bandpass filter.

7. A bothway RF repeater as defined in claim 2, 3 and 4, wherein said divider and/or combiner comprising a circulator, an electronic switch, a multi-branch divider and/or combiner, a hybrid circuit, a directional coupler, and/or equivalent circuits.

8. A bothway RF repeater as defined in claim 5 wherein:
(a) said detector means are set on the input stage, middle stage, and/or output stage of the amplifiers; and
(b) said control means at least control the output level of the down-link amplifier and/or the gain of the up-link amplifier.

9. A bothway RF repeater as defined in claim 1, 2. 3 or 4, wherein said antenna systems comprising an unti-standing-wave RF reception means which has a ground plane and/or refrector and a radiating element and/or slot, and further comprising;
(a) an array antenna with refrector; or
(b) a parabolic antenna or a corner refrector antenna; or
(c) other type of antenna which has a ground plane and/or refrector; or
(d) a RF radiation coaxial cable (or leaky coaxial cable) and/or a RF radiation wave guide and/or similar structures which have an outer (ground) conductor and radiating slots; or
(e) a RF radiation cable which has an inner (ground) conductor and radiating surfaces.

10. A bothway RF repeater as defined in claim 1. 2. 3 or 4, wherein the coaxial cables. antena systems and/or RF radiation cables comprising;
(a) the RF transmission and/or radiation/reception means which constitute the RF radiating/receiving elements and/or slots consecutively and/or intermittently in a line; and/or
(b) the RF transmission and/or radiation/reception means which are mutually isolated between up-link and down-link circuits.

11. A bothway RF repeater as defined in claim 1, 2. 3 and 4, wherein said base staion comprising;
(a) one or more transmitters and receivers operated in the FDMA/TDD or TDMA/TDD(Frequency Division Multiple Access or Time Division Multiple Access/Time Division Duplex) or CDMA(Code Division Multiple Access) scheme; and
(b) combiner and/or divider to combine and/or divide one or more tansmitters and/or receivers.

12. A bothway RF repeater as defined in claim 1. 2, 3 and 4, wherein said bothway RF repeaters are:
(a) installed within a building, under ground. on a top of the pole, on an overhead wire cable. and/or on a constructed structure; and/or
(b) connected toward a base station in series and/or in parallel through coaxial cables and/or RF radiation cables; and/or
(c) supplied the electric power through the inner conductor and/or outer conductor of said coaxial cables and/or RF radiation cables.
(d) composed with the CATV signals and/or other signals through RF transmission cables.
